# EUROPÄISCHE PATENTSCHRIFT

(11) **EP 3 688 429 B1**
(45) Veröffentlichungstag und Bekanntmachung des Hinweises auf die Patenterteilung: **17.11.2021**
(21) Anmeldenummer: 18773154.2
(22) Anmeldetag: 18.09.2018
(51) Int. Cl.: G01K 1/14

(54) **SENSOR MIT ANPRESSFEDERUNG**
SENSOR HAVING A PRESSING RESILIENCE
CAPTEUR AVEC AMORTISSEMENT D'APPUI

(30) Priorität: 28.09.2017 DE 102017122597
(43) Veröffentlichungstag der Anmeldung: 05.08.2020
(73) Patentinhaber: TDK Electronics AG, 81671 München (DE)
(72) Erfinder: ROGGE, Clemens, 14167 Berlin (DE); DEHOFF, Carsten, 13129 Berlin (DE)
(74) Vertreter: Epping - Hermann - Fischer
(86) Internationale Anmeldenummer: PCT/EP2018/075202
(87) Internationale Veröffentlichungsnummer: WO 2019/063364

(56) Entgegenhaltungen:
- EP-A2- 0 404 310
- US-A- 4 558 959
- US-B1- 6 227 703

## Beschreibung

Die Erfindung betrifft einen Sensor, insbesondere einen Temperatursensor, der während der Messung in direktem Kontakt mit einer zu messenden Oberfläche gebracht wird. Zur Herstellung eines innigen thermischen Kontaktes ist ein Anpressdruck an die Oberfläche erforderlich.

Bei verschiedenen technischen Bauteilen besteht das Problem, dass zum Bauteil gehörige Auswerte- und Überwachungselektroniken auf Temperaturmesswerte der zu überwachenden Oberflächen angewiesen sind. Wenn die Bauteile bewegliche Teile umfassen, einer Bewegung im Raum ausgesetzt sind oder auch nur vibrieren, so können Relativbewegungen zwischen dem Sensor und der zu überwachenden Oberfläche des Bauteils auftreten. Zum Beispiel können an einem Fahrzeug Vibrationen auftreten, die einen sicheren Kontakt des Sensorelements mit der Oberfläche gefährden können.

Um derartige Vibrationen aufzunehmen, ist entweder eine sichere Befestigung des Sensors auf der zu messenden Oberfläche erforderlich oder die Befestigung ist federnd ausgeführt, sodass die Befestigung oder der Sensor selbst eine Vibration unschädlich aufnehmen kann, ohne dabei den innigen Kontakt zwischen Sensor und zu messender Oberfläche aufzugeben. Darüber hinaus erfordert zum Beispiel die Überwachung der Temperatur einer Oberfläche eine konstant bleibende Anpresskraft, die auch über die Lebensdauer des Bauteils aufrechterhalten werden muss.

Bei mobilen Bauteilen oder bei Bauteilen, die in mobilen Geräten oder Einheiten verbaut sind, besteht außerdem das Problem, dass der Sensor auf kleinsten Bauraum auszuführen ist.

Ein Beispiel für die Anwendung eines solchen Sensors sind zum Beispiel Auswerte- und Überwachungselektroniken für Batterie- oder Stromleiteroberflächen, insbesondere bei elektrisch angetriebenen Fahrzeugen wie E-Bikes oder andere Fahrzeuge der E-Mobilität.

Bei bekannten Lösungen werden Temperatursensoren mit Hilfe eines Elastomerteils auf die zu messende Oberfläche gedrückt. Diese Lösung hat den Nachteil, dass beispielsweise durch UV-Einwirkung, wechselnde Temperaturbelastungen, zu hohe oder auch tiefe Temperaturen, eine Alterung des Elastomers eintritt, sodass die eingestellte Anpresskraft schwankt beziehungsweise durch Alterung nachlässt. Da insbesondere auch der Wärmeübertragungskoeffizient von der Anpresskraft abhängig ist, ergeben sich durch wechselnde Anpresskräfte von der Realität abweichende Temperaturwerte. Es treten Schwankungen auf, die zu Abweichungen führen können. Weiter können die Ansprechzeiten des Sensors in Abhängigkeit vom Betriebs- und Alterungszustand des Sensors schwanken. Ein weiteres Problem besteht darin, dass die Integration der Messleitungen des Sensors in die Kabelbäume von elektrobetriebenen Fahrzeugen arbeitsaufwändig und teuer ist, sodass oft eine manuelle Konfektion der Anschlüsse und insbesondere Stecker notwendig ist.

Weitere Lösungen sind aus den Druckschriften EP 0404310 A2 und US 4558959 A bekannt.

Ein weiteres Beispiel zur Ausführung eines Sensors ist in der Druckschrift US 6227703 B1 beschrieben.

Aufgabe der vorliegenden Erfindung ist es daher, einen Sensor anzugeben, der die oben genannten Nachteile vermeidet. Insbesondere soll ein Sensor angegeben werden, der in einfacher Weise einen konstanten Anpressdruck zur Verfügung erstellt und der diesen auch bei Alterung nahezu unverändert aufrechterhält. Eine weitere Aufgabe besteht darin, den Einbau des Sensors in ein gegebenes System, beispielsweise ein elektrobetriebenes Fahrzeug, zu erleichtern.

Anspruch 1 gibt einen Sensor an, der zumindest einige der genannten Aufgaben löst. Vorteilhafte Ausgestaltungen des Sensors sind in weiteren Ansprüchen angegeben.

Der Sensor ist zur Messung eines physikalischen Parameters an einem Messpunkt auf einer Oberfläche mittels Direktkontakt ausgelegt. Er weist ein beweglich im Sensor angeordnetes Sensorelement auf. Weiterhin umfasst er ein Federelement, welches eine Andruckkraft elastisch aufnehmen kann, mit der das Sensorelement gegen den Messpunkt gedrückt wird. Durch die Verbindung des im Sensor beweglichen Sensorelements und die durch das Federelement zur Verfügung gestellte Anpresskraft wird ein System erhalten, mit dem ein konstanter Anpressdruck eingestellt werden kann. Dieser kann im Rahmen der Federelastizität des Federelements auch Relativbewegungen zwischen Oberfläche und Sensor aufnehmen, ohne dass der Anpressdruck nachlässt oder sich die Position des Messpunktes verschiebt.

Der vorgeschlagene Sensor ist dann nicht mehr darauf angewiesen, mit Hilfe eines aus elastomerem Kunststoff bestehenden Druckpuffers gegen die Oberfläche gedrückt zu werden, und ist daher auch nicht von der Alterung eines solchen abhängig. Das Federelement ist ein mechanisches Element, welches langzeitstabil ausgeführt sein kann und dabei seine Federwirkung auch bei unterschiedlichen Auslenkungen nicht verliert. Im Gegensatz zu bekannten Lösungen wird hier ein variierender Abstand zwischen dem Messpunkt und dem Sensor durch das bewegliche Sensorelement selbst kompensiert. Der Sensor ist so ausgeführt, dass eine eingestellte minimale Anpresskraft beim Auftreten von im erwarteten Rahmen liegenden Relativbewegungen nicht unterschritten wird.

Weiterhin umfasst der Sensor eine Grundplatte, die Anschlussstifte aufweist. Auf der Grundplatte sitzt eine Abdeckkappe auf. Grundplatte und Abdeckkappe bilden ein Gehäuse, in dem ein Schlitten mittels des Federelements unter einer Vorspannung so befestigt ist, dass der Schlitten und das darauf angeordnete Sensorelement in Richtung der Grundplatte gegen die Vorspannung beweglich ist. Das Sensorelement ist am Schlitten befestigt und über Anschlussdrähte elektrisch mit den Anschlussstiften auf der Grundplatte verbunden. Über die Grundplatte kann außerdem der elektrische Anschluss des Sensors an eine äußere Schaltungsumgebung erfolgen.

Zur Durchführung einer Messung wird der Sensor gegen einen Messpunkt auf eine zu vermessende Oberfläche gedrückt, wobei der Schlitten mit dem Sensorelement gegen die Federwirkung des Federelements in Richtung Grundplatte bewegt wird, sodass sich eine Rückstellkraft einstellt.

Das Federelement kann auch in der Ruhestellung des Sensors, wenn dieser nicht gegen einen Messpunkt gedrückt wird, unter einer Vorspannung stehen. Diese Vorspannung kann durch Kompression des Federelements eingestellt sein.

In einer alternativen Lösung wird die Vorspannung durch Expansion des Federelements erzeugt.

In einer dritten Ausführung unterscheidet das Federelement nicht zwischen Expansion und Kompression und wird vielmehr durch die Relativbewegung zwischen Schlitten und Grundplatte aus seiner Ausgangslage bewegt. Dabei baut es in Abhängigkeit vom Grad der Auslenkung eine Rückstellkraft auf, die entgegen der Auslenkung wirkt.

Auch in Ruhestellung (ohne zusätzliche Auslenkung) weist das Federelement eine Vorspannung auf, so das die gewünschte Rückstellkraft bereits bei geringster Auslenkung aus der Ruhestellung wirken kann.

Gemäß einer Ausführung ist die Auslenkung des Schlittens zur Einstellung der Vorspannung des Federelements größer als die zu erwartende Relativbewegung, sodass stets ein Anpressdruck erhalten werden kann.

Das Gehäuse dient zum einen zum Schutz von Schlitten, Sensorelement und Federelement gegen äußere Einwirkungen und dient zum anderen zur Halterung und Führung des Schlittens.

In einer Ausführungsform weist die Abdeckkappe eine Führung auf, in der der Schlitten so geführt ist, dass er ausschließlich in Richtung Grundplatte und zurück beweglich ist. Eine solche Führung kann eine Führungsschiene ausgebildet sein, in die ein entsprechender Steg am Schlitten eingreift. Alternativ kann eine als Schiene ausgebildete Führung Schiene auch am Schlittenvorgesehen sein und der entsprechende Steg am Gehäuse, z.B. an der Abdeckkappe.

Das Federelement ist als Blattfeder ausgebildet. Diese weist zwei Enden auf, die seitlich vom Schlitten abstehen. Mit beiden Enden liegt die Blattfeder an einem Anschlag im Gehäuse an. Der Anschlag befindet sich zwischen der Blattfeder und der Grundplatte, sodass durch Bewegung des Schlittens in Richtung Grundplatte die Blattfeder am Anschlag ansteht und bei weiterer Bewegung in Richtung Grundplatte ausgelenkt wird.

In einer Ausführungsform weist der Schlitten eine Hülse mit einem geschlossenen Ende auf. In dieser Hülse ist das Sensorelement eingesteckt beziehungsweise angeordnet und befestigt. Mit dem geschlossenen Ende ist die Hülse durch eine Öffnung in der Abdeckkappe geführt und weist somit von der Grundplatte weg. Das geschlossene Ende mit dem Sensorelement darin stellt quasi den Sensorkopf dar, über den der zu messende Parameter, insbesondere die zu messende Temperatur, bestimmt wird. Dementsprechend weist die Hülse ein thermisch gut leitfähiges Material auf, um einen guten Wärmeübergang vom Messpunkt auf der Oberfläche hin zum Sensorelement zu gewährleisten.

Eine Ausführungsform ist die Hülse aus einem metallischen Material gefertigt, beispielsweise aus Aluminium. An der äußeren und/oder der inneren Oberfläche kann die Hülse mit einer elektrisch isolierenden Beschichtung versehen sein, im Falle von Aluminium beispielsweise mit einer Oxidschicht. Damit ist es möglich, auch an Messpunkten zu messen, die im Vergleich zum Sensor einen elektrischen Potentialunterschied aufweisen, ohne dass es zu gefährlichen Rück- oder Überschlägen kommt.

Ein einfacher Zusammenbau des Gehäuses gelingt in einer Ausführungsform auf rein mechanische Weise durch Aufstecken der Abdeckkappe auf die Grundplatte. Dazu kann die Abdeckkappe Rastelemente aufweisen, die beim Zusammenstecken des Gehäuses in entsprechende Aufnahmen der Grundplatte einrasten können und dann im zusammengebauten Zustand auch eingerastet sind.

Ein bevorzugtes Rastelement ist eine Rastnase, die an einer überstehenden Kante der Grundplatte einrasten kann. Möglich ist es natürlich auch, Rastelemente an der Grundplatte vorzusehen und diese in der Abdeckkappe einrasten zu lassen. Um eine bessere Zugänglichkeit der Grundplatte und insbesondere der Anschlussstifte zu ermöglichen, kann die Grundplatte bis auf die Anschlussstifte eben ausgebildet sein, um eine bessere und einfachere Befestigung der Anschlussdrähte an den Anschlussstiften zu ermöglichen.

Eine vorteilhafte Ausführungsform verwendet Anschlussstifte, die lötfrei in die Grundplatte eingepresst sind. Da ein Anschlussstift vorteilhaft sowohl eine Anschlussmöglichkeit für die Anschlussdrähte des Sensorelements als auch eine nach außen weisende Anschlussmöglichkeit an eine Schaltungsumgebung aufweist, durchbrechen die Anschlussstifte vorteilhaft die Grundplatte und weisen so einen nach innen und einen nach außen weisenden Abschnitt auf. Mit dem nach außen weisenden Abschnitt kann der Sensor mit der Schaltungsumgebung verbunden werden und beispielsweise ebenfalls lotfrei in eine Leiterplatte oder eine andere Schaltungsumgebung eingesteckt werden.

In einer bevorzugten Anwendung ist das Sensorelement als Temperatursensor auf der Basis eines NTC-Elements (NTC = negative temperature coefficient). NTC-Temperaturelemente sind von Haus aus bedrahtet und weisen einen vergossenen Kopf auf. Es kann aber auch als Thermoelement oder als ohmsches Widerstandselement ausgeführt sein.

Im vorgeschlagenen Sensor ist das Sensorelement beziehungsweise dessen Kopf in der Hülse eingesteckt und dort mit einer Vergussmasse vergossen. Auch hier ist die Vergussmasse vorteilhaft so gewählt, dass eine gute Wärmeübertragung stattfinden kann, sodass thermisch gut leitende Vergussmassen bevorzugt sind. Die thermische Leitfähigkeit kann durch thermisch leitfähige Füllstoffe in der Vergussmasse erhöht werden.

Der Anschlag für die Blattfeder muss sich aus technischen Gründen in einer Entfernung von der Grundplatte befinden, die zumindest dem maximalen Auslenkweg des Schlittens plus der Höhe, mit der der Schlitten selbst über den Befestigungsort der Blattfeder steht, entspricht. Um eine solche Höhe über der Grundplatte zu schaffen, wird in einer Ausführungsform ein Abstandsring zwischen Abdeckkappe und Grundplatte so eingefügt, dass der Abstandsring ein Segment des Gehäuses ausbildet. Der Anschlag für die Blattfeder kann dann am unteren Ende des Abstandsrings in Richtung Sensorkopf ausgebildet sein.

Eine Befestigung des Abstandsrings gelingt in einfacher Weise mit den besagten Rastelementen, indem diese durch den Abstandsring durchgreifen und in die entsprechenden Aufnahmen in der Grundplatte eingreifen, sodass der Abstandsring zwischen Grundplatte und Abdeckkappe eingeklemmt und somit festsitzend befestigt wird.

Insbesondere das als Blattfeder ausgebildete Federelement nimmt Relativbewegungen zwischen Sensorelement und Sensor auf. Zusätzlich sind die Anschlussdrähte des Sensorelements abgebogen, um die entsprechende Relativbewegung mit einer Verformungsreserve auszugleichen. Vorzugsweise sind die parallel zueinander in kurzem Abstand aus dem Sensorelement herausgeführten Anschlussdrähte seitlich nach außen abgebogen, sodass sich für die gesamte Geometrie der Anschlussdrähte eine T-förmig oder Y-förmig ist.

Für die Komponenten des Gehäuses sowie den Schlitten und die Grundplatte sind als Materialien Kunststoffe bevorzugt, die in einfacher Weise mittels Spritzguss hergestellt werden können. Zur Einstellung gewünschter Eigenschaften können die Kunststoffe mit Füllstoffen gefüllt sein.

Im Folgenden wird die Erfindung anhand von Ausführungsbeispielen und der dazugehörigen Figuren näher erläutert. Die Figuren sind zum Teil rein schematisch ausgeführt und dienen nur der besseren Veranschaulichung der Erfindung. Einzelne Teile können dabei verkleinert oder vergrößert dargestellt sein, sodass die Darstellungen nicht maßstabsgetreu sind. Es zeigen:
Figur 1 schematische Ausführungen von Sensoren mit leicht verschiedenen Funktionsprinzipien im Querschnitt,
Figur 2 beispielhafte Führungen eines Schlittens im Gehäuse anhand eines schematischen Querschnitts,
Figur 3 ein als Blattfeder ausgebildetes Federelement samt Anschlägen im Gehäuse,
Figur 4 eine perspektivische Ansicht eines Sensors mit Hülse, die durch eine Öffnung im Gehäuse geführt ist,
Figur 5 zwei Beispiele für die Verbindung von Abdeckkappe und Grundplatte mittels Rastelementen,
Figur 6 eine mögliche Verbindung des Anschlussdrahts mit den Anschlussstiften,
Figur 7A eine Explosionszeichnung der verschiedenen Sensorkomponenten und
Figur 7B ein Ausführungsbeispiel eines zusammengebauten Sensors im perspektivischen Querschnitt.

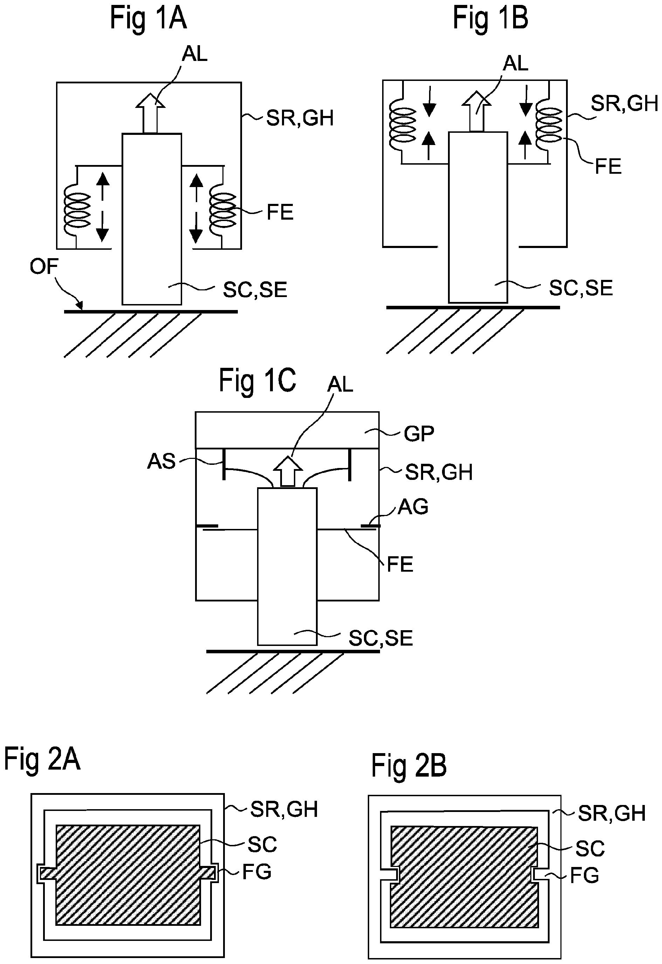

Figuren 1A bis 1C zeigen anhand schematischer Querschnittszeichnungen einfache Ausführungsformen eines erfindungsgemäßen Sensors. Der Sensor umfasst ein Sensorelement SE, welches fest mit einem Schlitten SC verbunden ist. Dieser Schlitten ist beweglich im Sensor SR, z.B. in einem Gehäuse GH aufgehängt und mittels Federelementen FE so mit dem Sensor Schutzrecht/Gehäuse GH gekoppelt, dass die Federelemente FE eine Andrückkraft des Sensorelements beziehungsweise Schlittens SC, SE elastisch aufnehmen können. Die Richtung der Auslenkung des Schlittens SC ist durch einen Pfeil AL angedeutet, während die jeweiligen Pfeile am Federelement die Auslenkung des Federelements durch die Auslenkung des Schlittens SC darstellen. In der Ausführung gemäß Figur 1A kommt es zu einer Dehnung der Federelemente FE in Richtung AL, sodass sich die entsprechende Rückstellkraft entgegen der Auslenkung AL einstellt.

Figur 1B zeigt eine Ausführungsform, in der eine Auslenkung in Richtung AL zu einer Kompression der Federelemente FE führt, dargestellt durch die jeweiligen Pfeile parallel zu den Federelementen. Die Rückstellkraft wird durch Entspannung der Federelemente erreicht.

Figur 1C zeigt eine Ausführungsform, bei der als Federelement FE eine Blattfeder am Schlitten SC befestigt ist, die im Gehäuse GH an einem Anschlag AG anstößt. Bei einer Auslenkung des Schlittens SC in Richtung AL kommt es zu einer Durchbiegung der Blattfeder, sodass sich eine Rückstellkraft einstellt.

In allen drei dargestellten Fällen gemäß der Figuren 1A bis 1C wird eine Auslenkung des Schlittens SC in Richtung AL und damit eine Auslenkung des Sensorelements SE in das Gehäuse hinein von einem Federelement FE aufgenommen, welches mit seiner Rückstellkraft für einen Andruck des Schlittens SC beziehungsweise des daran befestigten Sensorelements SE auf eine Oberfläche OF sorgt. Ein Messpunkt auf der Oberfläche OF, an dem ein physikalischer Parameter bestimmt werden soll, befindet sich im Kontaktbereich des Schlittens SC beziehungsweise Sensorelements SE mit der Oberfläche OF.

Figur 1C zeigt zusätzlich, wie das Sensorelement SE mittels Anschlussdrähten an Anschlussstiften AS befestigt sein kann. Die Anschlussstifte AS stecken in einer Grundplatte GP, die den hier oben dargestellten Teil des Gehäuses GH des Sensors SR bilden. Durch die Auslenkung in Richtung AL kommt es zwar zu einer Deformierung der Anschlussdrähte BW, die jedoch keine Rückstellkraft für sich erzeugen. Dies obliegt allein den Federelementen FE.

Figuren 2A und 2B zeigen Möglichkeiten, wie ein Schlitten SC innerhalb des Gehäuses GH des Sensors SR geführt werden kann. Dazu weist das Gehäuse GH eine entsprechende Führung auf, die in der Ausführung gemäß Figur 2A als Nut oder Schiene im Inneren des Gehäuses GH ausgeführt ist. In diese Nut greift eine entsprechende Nocke oder ein Steg des Schlittens SC ein. Schiene und Steg sind parallel zur Auslenkrichtung AL ausgerichtet.

Vorteilhaft weist der Sensor zumindest zwei Führungen auf, die an einander gegenüberliegenden Seiten des Sensors SR angeordnet sind. Möglich ist es jedoch auch, den Schlitten mit einer höheren Anzahl von Führungen sicher im Sensorgehäuse GH zu führen.

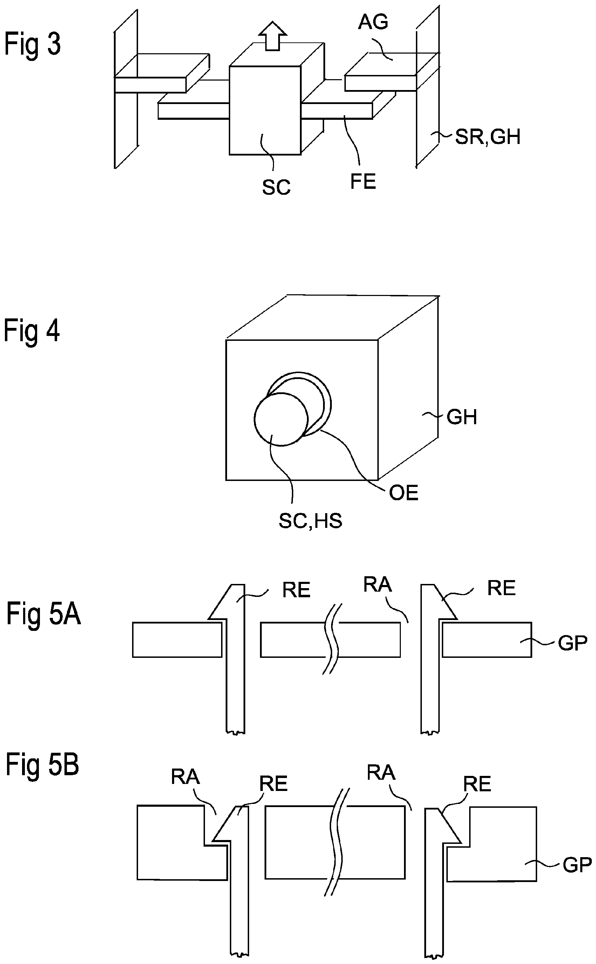

Figur 3 zeigt in schematischer Darstellung einen Schlitten mit daran befestigter Blattfeder. Der Schlitten SC ist gegen die Federkraft des als Blattfeder ausgebildeten Federelements FE in das Gehäuse GH des Sensors SR hinein eingedrückt, wobei sich durch Auslenkung der Blattfeder FE, die am Anschlag AG anstößt, eine entsprechende elastische Rückstellkraft einstellt. Die Blattfeder FE besitzt zwei vom Schlitten weg weisende Enden, die im Gehäuse GH einen geringen Überlapp mit entsprechenden Anschlägen AG besitzen. Der Überlapp ist so ausreichend gering bemessen, dass sich ein ausreichend großer Anteil der Blattfeder zwischen Schlitten und Anschlag verbiegen kann, um die entsprechende Rückstellkraft zu gewährleisten.

Figur 4 zeigt in einer perspektivischen Darstellung, wie der Schlitten SC aus dem Gehäuse GH herausgeführt werden kann.

Dargestellt ist eine Hülse HS, die mit dem Schlitten verbunden ist beziehungsweise einen Teil des Schlittens darstellt. Diese ist durch eine Öffnung OE in einer Seitenfläche beziehungsweise Unterseite des Gehäuses GH geführt. In der Öffnung OE ist die Hülse HS frei in Auslenkrichtung AL beweglich, die hier mit der vertikal zur Papierebene stehenden Achse identisch ist.

Das Gehäuse des Sensors SR kann wie beschrieben aus einer Grundplatte GP und einer Abdeckkappe KP bestehen. Die üblicherweise flach ausgeführte Grundplatte GP kann mit der Abdeckkappe KP mittels Rastelementen RE verbunden werden, wie sie in den Figuren 5A und 5B in einfacher Ausführung dargestellt sind. Ein jedes Rastelement RE der Abdeckkappe KP weist zum Beispiel eine Rastnase auf, die in einer Aufnahme RA einrasten kann.

Figur 5A zeigt eine Ausführung, bei der die Aufnahme RA für das Rastelement RE als eine Durchbrechung in der Grundplatte GP ausgeführt ist. Die Rastnase kann dann oberhalb der Ausnehmung an einer Kante der Aufnehmung RA einrasten. Figur 5B zeigt eine ähnliche Ausführung, bei der jedoch das Einrasten an einer versenkten Stufe innerhalb der Aufnahme RA erfolgt. Auf diese Weise ist gewährleistet, dass das Rastelement RE nach dem Einrasten nicht über die Oberkante der Grundplatte GP ragt.

Die Rastelemente RE weisen vorzugsweise an der Oberseite eine abgeschrägte Kante auf, sodass sie beim Einstecken von unten in die Aufnahme RA an der unteren Kante der Aufnahme RA abgelenkt werden, bis die Rastnahme innerhalb der Aufnahme RA einrastet. Die Triebkraft für das Einrasten Rastelemente RE entspricht der Rückstellkraft der Rastelemente RE nach der Ablenkung an der abgeschrägten Kante. Die Rastelemente RE, weisen eine ausreichende Elastizität auf, um das Ablenken zu ermöglichen und die Rückstellkraft einzustellen.

Grundplatte GP und Abdeckkappe KP können durch zumindest zwei, vorzugsweise aber vier und mehr Rastelemente sicher miteinander verbunden werden. Vorzugsweise ist die Abdeckkappe KP so gestaltet, dass sie beim Einrasten der Rastelemente RE in den Aufnahmen RA von unten an der Grundplatte GP anliegt (in der Figur nicht dargestellt).

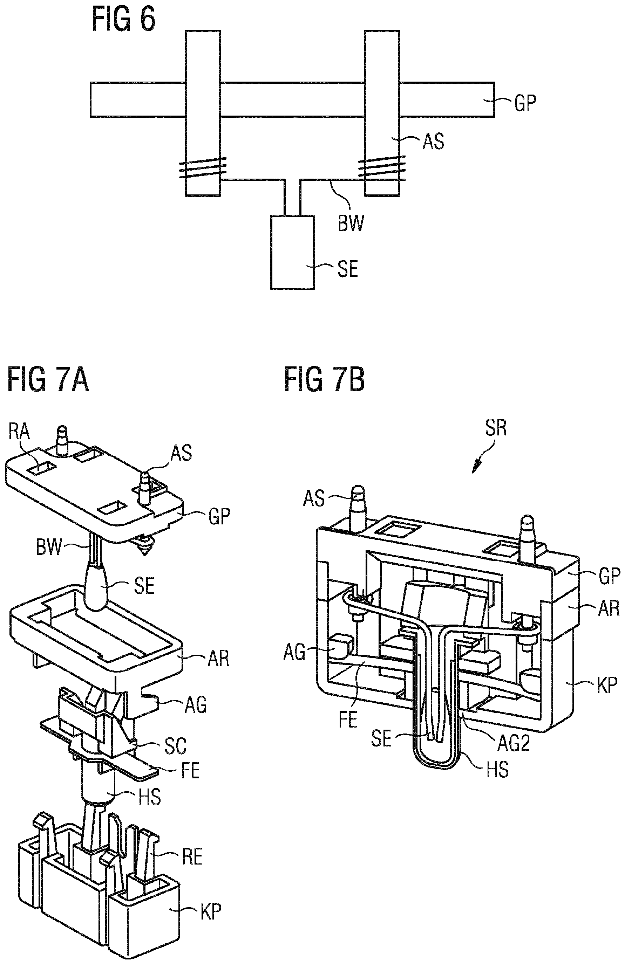

Figur 6 zeigt in schematischer Querschnittsdarstellung wie das Sensorelement SE mittels Anschlussdrähten BW an den Anschlussstiften AS befestigt werden kann, die in der Grundplatte GP stecken beziehungsweise diese durchbrechen.

Die Anschlussdrähte BW sind vorzugsweise um das untere Ende der Anschlussstifte AS gewickelt und dort mit den metallischen Anschlussstiften AS verlötet. Die Anschlussdrähte BW sind in ihrem Verlauf zunächst parallel aus dem Sensorelement SE geführt, dann nach außen abgeknickt, bevor die abgeknickten Enden um die Enden der Anschlussstifte AS gewickelt sind. Über das Abwinkeln entsteht eine ausreichende Dehnungsreserve, um eine Auslenkung des Sensorelements SE relativ zur Grundplatte GP und damit relativ zu den Anschlussstiften AS zu ermöglichen.

Figur 7A zeigt eine mögliche Ausführung eines Sensors in einer geometrisch exakter Explosionsdarstellung und somit in einer realen Geometrie. Die dargestellten Einzelteile ergeben zusammen einen funktionsfähigen Sensor SR. Das Gehäuse GH des Sensors SR wird durch eine Grundplatte GP, einen Abstandsring AR und eine Abdeckkappe KP gebildet. Die Abdeckkappe KP weist Rastelemente RE auf, die durch den Abstandsring AR hindurch in entsprechende Aufnahmen RA an der Grundplatte GP geführt werden können, um dort in den Aufnahmen RA einzurasten. Auf diese Weise wird der Abstandsring AR zwischen Abdeckkappe KP und Grundplatte GP fest arretiert.

Das Sensorelement SE ist über Anschlussdrähte BW mit den die Grundplatte GP durchbrechenden Anschlussstiften AS befestigt. Das Sensorelement SE beziehungsweise die daraus hinausgeführten Anschlussdrähte BW weisen vertikal von der Grundplatte weg, in der Figur nach unten.

Als im Sensor bewegliches Sensorteil ist als Schlitten SC ausgebildet, der zumindest eine geschlossene Hülse HS aufweist, in die das Sensorelement SE samt Anschlussdrähten BW eingesteckt werden kann. Quer zum Schlitten SC ist eine Blattfeder mit dem Schlitten SC verbunden, deren beide Enden seitlich vom Schlitten SC abstehen.

Der Schlitten SC ist nach dem Zusammenstecken des Gehäuses, also nach Verbinden der Abdeckkappe KP mit der Grundplatte GP unter Einschluss des Abstandsrings AR im Rahmen einer gewissen Auslenkung innerhalb des Gehäuses frei in Auslenkrichtung AL beweglich. Beim Zusammenstecken des Gehäuses werden die Enden der Blattfeder FE gegen einen Anschlag AG gedrückt, der vorzugsweise im Abstandsring AR ausgebildet ist und so im fertig zusammengesteckten Gehäuse über (unter) der unteren Oberfläche der Grundplatte GP steht. Ein zweiter Anschlag AG2 ist rund um eine Öffnung OE ausgebildet, durch die die Hülse durch die Abdeckkappe KP geführt wird. Mit dem zweiten Anschlag AG2 wird der Schlitten SC beim Zusammenstecken des Gehäuses mitsamt seiner Blattfeder gegen den Anschlag am Abstandsring AR gedrückt und so vorgespannt.

Eine weiter erhöhte Vorspannung entsteht, wenn der fertige Sensor SR gegen die zu messende Oberfläche OF gedrückt wird. Damit ist auch eine Auslenkung des Schlittens SC entegen der Richtung AL möglich, sofern diese aufgrund einer entsprechenden Relativbewegung zwischen Oberfläche und Sensor erforderlich ist.

Figur 7B zeigt den Sensor SR im zusammengesteckten Zustand. Im gezeigten Ausführungsbeispiel hat das Gehäuse des Sensors Abmessungen von 20x12,5x10,4 mm. Ohne weitere Auslenkung sitzt der Schlitten SC am zweiten Anschlag AG2 auf und ist durch Auslenkung der Blattfeder FE am ersten Anschlag AG vorgespannt. Wird nun der Sensor mit der aus dem Gehäuse vorstehenden Hülse HS beziehungsweise mit dem vorstehenden Ende gegen eine Oberfläche OF und dort gegen einen Messpunkt gedrückt, so kann sich der Schlitten SC in Auslenkrichtung AL ins Innere des Gehäuses GH hinein bewegen. Dabei kannbei ein weiterer Anschlag am Abstandsring AR oder durch die Unterseite der Grundplatte GP ausgebildet eine maximale Auslenkung des Schlittens begrenzen.

In einem Ausführungsbeispiel ist der Sensor so dimensioniert, dass beim Zusamenstecken des Gehäuses GH das Federelement FE (hier die Blattfeder) eine Auslenkung erfährt, die einer Bewegung des Schlittens in Richtung AL von ca. 0,3 mm entspricht. Diese Mindestauslenkung sollte inklusive Einbautoleranzen eigehalten werden. Damit wird die Rückstellkraft in Ausgangsstellung oder Ruhestellung des Sensors SR eingestellt. Beim Aufsetzen des Sensorkopfes (geschlossenes Ende der Hülse HS) auf der Oberfläche OF erfolgt eine weitere Auslenkung des Schlittens bis maximal ca. 2 mm. Im eingebauten Zustand des Sensors kann dann noch eine Relativbewegung von ± 0,3 mm zwischen Sensor und Oberfläche erfolgen, die vom Sensor aufgenommen werden kann, ohne dass dabei der Anpressdruck unzulässig vermindert wird.

Das Sensorelement SE ist beispielsweise ein herkömmlicher Temperatursensor auf der Basis eines NTC-Widerstandselements, der in der Hülse HS vergossen werden kann. Dazu kann beispielsweise ein herkömmliches Gießharz auf der Basis eines Epoxids oder eines anderen aushärtbaren Kunstharzes erfolgen.

Die Hülse ist vorzugsweise aus Metall gefertigt und kann innen und/oder außen elektrisch isoliert sein. Eine Verbindung der Hülse mit dem Schlitten SC und dem als Blattfeder ausgebildeten Federelements FE kann beim Herstellen des Schlittens SC mittels Spritzguss erfolgen, bei dem die Blattfeder und das Ende der Hülse quasi vom Schlitten SC umspritzt wird.

Die Anschläge AG am Abstandsring AR für die Blattfeder FE sind so angeordnet, dass sie in Montagerichtung unterhalb der Lötstelle des Anschlussdrahts am Anschlussstift zu liegen kommen. Auf diese Weise gelingt es, das Gehäuse mit nur geringer Höhe auszuführen.

Die Anschlussstifte AS sind vorzugsweise Einpresskontakte, die eine Harpunenprägung aufweisen können. Mit Hilfe der Harpunenprägung gelingt ein Eindrücken in die Grundplatte GP, wo die Anschlussstifte AS über die Harpunenprägung festsitzen können.

Auch das nach außen weisende Ende der Anschlussstifte AS ist so ausgestaltet, dass es in eine Leiterplatte (in der Figur nicht dargestellt) lötfrei eingepresst werden kann. Dazu ist beispielsweise das Ende der Anschlussstifte als komprimierbare Öse geformt, die sich im Inneren der Leiterplatte wieder ausdehnen kann, sodass auch in der Leiterplatte ein fester Sitz der Anschlussstifte AS gewährleistet ist.

Die Blattfeder FE kann in der dargestellten Ausführung metallisch sein und zum Beispiel durch Ausstanzen hergestellt sein. In der Mitte weist die Blattfeder FE eine entsprechende Ausnehmung auf, durch die das Sensorelement durchgesteckt ist. Auch die Hülse kann durch die Ausnehmung der Blattfeder FE gesteckt sein. Die Blattfeder kann in Richtung des Schlittens jedoch auch eine Halterung für den Schlitten SC aufweisen, die eine nachträgliche Befestigung der Blattfeder BF am Schlitten SC und/oder der Hülse HS am Schlitten SC ermöglicht.

Das Sensorelement SE kann auch als Thermoelement oder als ohmsches Widerstandselement ausgeführt sein. Entsprechende Auswerteschaltungen für das Sensorelement SE können in einer externen Schaltungsumgebung, insbesondere auf der Leiterplatte, ausgeführt sein, in die der Sensor SR eingesteckt wird. Die Komponenten des Gehäuses, also Grundplatte GP, Abstandsring AR und Abdeckkappe KP können durch Kunststoff- oder Keramikspritzguss hergestellt sein. Die elektrische Kontaktierung auf der Leiterplatte kann auch über eine Lötverbindung (THT oder SMT) erfolgen, wobei jedoch die lötfreie Steckverbindung bevorzugt ist, die z.B. der DIN EN 60352-4 gehorchen kann. Sämtliche Bestandteile des Sensors SR sind so ausgeführt, dass eine geradlinige Montage in Steckbauweise möglich ist. Das Sensorelement kann vor dem Zusammenstecken der Gehäusebauteile an den Anschlussstiften AS in der Grundplatte GP befestigt werden, wo sie aufgrund der flachen Bauweise der Grundplatte GP frei zugänglich sind. Die übrigen Teile werden einfach durch Aufstecken in Auslenkrichtung AL auf die Grundplatte GP montiert. Im zusammengesteckten Gehäuse ist der Schlitten am unteren Anschlag AG2 anliegend unter Vorspannung der Blattfeder FE, die am oberen Anschlag AG vorgespannt.

Ein erfindungsgemäßer Sensor kann auch in anderer geometrischer Ausführung ausgebildet werden, wobei beispielsweise Gehäuse und Schlitten weitere als die dargestellten Ausführungen aufweisen können. Insbesondere kann eine höhere Anzahl an Rastelementen eingesetzt werden. Die Rastelemente können auch so ausgebildet sein, dass sie außerhalb der Grundplatte diese umgreifen und oberhalb der Grundplatte einrasten können. Auch andere Ausführungen von Rastelementen und entsprechenden Aufnehmungen sind möglich.

### Bezugszeichenliste

- AG: Anschlag
- AS: Anschlussstifte
- AS_{A},AS_{I}: nach außen und innen weisende Abschnitte der ASS
- BF: Blattfeder
- BW: Anschlussdrähte
- DR: Abstandsring
- FE: Federelement
- FG: Führung
- GH: Gehäuse
- GP: Grundplatte
- HS: Hülse mit geschlossenem Ende
- KP: Abdeckkappe
- RA: Aufnahme für Rastelement an der Grundplatte
- RE: Rastelement
- SE: Sensorelement
- SC: Schlitten
- SR: Sensor

## Patentansprüche

1. Sensor zur Messung eines Parameters an einem Messpunkt einer Oberfläche (OF) mittels Direktkontakt, aufweisend
- ein beweglich im Sensor (SR) angeordnetes Sensorelement (SE),
- ein Federelement (FE), welches eine Andrückkraft elastisch aufnehmen kann, mit der das Sensorelement gegen den Messpunkt gedrückt wird,
- einen Schlitten (SC), an dem das Sensorelement (SE) und das Federelement (FE) befestigt sind,
- eine Grundplatte (GP),
- eine auf der Grundplatte aufsitzende Abdeckkappe (KP),
- wobei Grundplatte und Abdeckkappe ein Gehäuse bilden, welches den Schlitten samt Federelement aufnimmt und umschließt,
bei dem der Schlitten mittels des Federelements im Sensor unter einer Vorspannung so befestigt ist, dass der Schlitten und damit das Sensorelement in Richtung Grundplatte gegen die Vorspannung beweglich ist,
**dadurch gekennzeichnet, dass** das Federelement (FE) als Blattfeder mit zwei Enden ausgebildet ist, die beide seitlich vom Schlitten (SC) abstehen,
die beiden Enden der Blattfeder an einem Anschlag (AG) im Gehäuse anliegen und
der Schlitten (SC) und das daran befestigte Sensorelement (SE) in Richtung Grundplatte (GP) gegen den Anschlag (AG) gedrückt sind,
die Grundplatte (GP) Anschlussstifte (AS) aufweist und
der Sensor Anschlussdrähte (BW) aufweist, die das Sensorelement elektrisch mit den Anschlussstiften verbinden.

2. Sensor nach einem der vorhergehenden Ansprüche,
bei dem die Abdeckkappe (KP) eine Führung (FG) aufweist, in der der Schlitten (SC) so geführt ist, dass er in Richtung Grundplatte (GP) und zurück beweglich ist.

3. Sensor nach einem der vorhergehenden Ansprüche,
bei dem der Schlitten (SC) eine Hülse (HS) mit einem geschlossenen Ende aufweist, in der das Sensorelement (SE) angeordnet und befestigt ist,
bei dem die Abdeckkappe (KP) eine Öffnung aufweist, durch die das von der Grundplatte weg weisende geschlossene Ende der Hülse (HS) geführt ist.

4. Sensor nach einem der vorhergehenden Ansprüche,
bei dem die Abdeckkappe (KP) Rastelemente (RE) aufweist, mit denen sie in entsprechende Aufnahmen (RA) der Grundplatte (GP) eingerastet ist.

5. Sensor nach einem der vorhergehenden Ansprüche,
bei dem die Anschlussstifte (AS) in die Grundplatte (GP) eingepresst sind und diese durchbrechen, so dass sie einen nach innen und einen nach außen weisenden Abschnitt (AG_{I},AG_{A}) aufweisen, wobei letzterer zum Verbinden des Sensors (SR) mit einer Schaltungsumgebung vorgesehen ist.

6. Sensor nach einem der vorhergehenden Ansprüche,
bei dem das Sensorelement (SE) ein Temperatursensor auf NTC Basis ist,
bei dem das Sensorelement (SE) in die Hülse (HS) eingesteckt und dort mit einer Vergussmasse vergossen ist.

7. Sensor nach einem der vorhergehenden Ansprüche,
bei dem die Grundplatte (GP) als flache Platte ausgebildet ist
bei dem ein Abstandsring (DR), der ein Segment des Gehäuses ausbildet, zwischen Abdeckkappe (KP) und Grundplatte (GP) eingefügt ist, wobei die Rastelemente (RE) durch den Abstandsring (DR) greifen, so dass dieser zwischen Abdeckkappe (KP) und Grundplatte (GP) gehaltert ist,
wobei der Anschlag (AG) für die Enden der Blattfeder am Abstandsring ausgebildet ist.

8. Sensor nach einem der vorhergehenden Ansprüche,
bei dem dem die Anschlussdrähte (BW) des Sensorelements (SE) seitlich nach außen abgebogen sind.

9. Sensor nach einem der vorhergehenden Ansprüche,
bei dem die Hülse (HS) aus Metall ausgebildet ist bei dem Grundplatte(GP), Schlitten (SR), Abdeckkappe (KP) und ggfs. Abstandsring (DR) als Spritzgussteil aus einem gefüllten oder ungefüllten Kunststoff ausgebildet sind.

## Claims

1. Sensor for measuring a parameter at a measurement point of a surface (OF) by means of direct contact, comprising
- a sensor element (SE) arranged movably in the sensor (SR),
- a spring element (FE) which can resiliently absorb an application force with which the sensor element is pressed against the measurement point,
- a carriage (SC) on which the sensor element (SE) and the spring element (FE) are fastened,
- a base plate (GP),
- a cover cap (KP) seated on the base plate,
- the base plate and the cover cap forming a housing which receives and encloses the carriage together with the spring element,
wherein the carriage is fastened by means of the spring element in the sensor with a prestress in such a way that the carriage and therefore the sensor element can move against the prestress in the direction of the base plate, **characterized in that** the spring element (FE) is configured as a leaf spring with two ends, both of which protrude laterally from the carriage (SC),
the two ends of the leaf spring bear on a stop (AG) in the housing and
the carriage (SC) and the sensor element (SE) fastened thereon are pressed in the direction of the base plate (GP) against the stop (AG),
the base plate (GP) comprises connection pins (AS) and the sensor comprises bonding wires (BW) which electrically connect the sensor element to the connection pins.

2. Sensor according to one of the preceding claims, wherein the cover cap (KP) comprises a guide (FG), in which the carriage (SC) is guided in such a way that it can move in the direction of the base plate (GP) and back.

3. Sensor according to one of the preceding claims, wherein the carriage (SC) comprises a sleeve (HS), which has a closed end and in which the sensor element (SE) is arranged and fastened,
wherein the cover cap (KP) comprises an opening through which the closed end, facing away from the base plate, of the sleeve (HS) is fed.

4. Sensor according to one of the preceding claims, wherein the cover cap (KP) comprises latch elements (RE), with which it is latched in corresponding recesses (RA) of the base plate (GP).

5. Sensor according to one of the preceding claims, wherein the connection pins (AS) are pressed into the base plate (GP) and pass through the latter, so that they comprise a section pointing inward and a section pointing outward (AG_{I},AG_{A}), the latter being provided in order to connect the sensor (SR) to a circuit environment.

6. Sensor according to one of the preceding claims, wherein the sensor element (SE) is an NTC-based temperature sensor,
wherein the sensor element (SE) is fitted into the sleeve (HS) and is encapsulated there with an encapsulation compound.

7. Sensor according to one of the preceding claims, wherein the base plate (GP) is configured as a flat plate, wherein a spacer ring (DR), which forms a segment of the housing, is inserted between the cover cap (KP) and the base plate (GP), the latch elements (RE) engaging through the spacer ring (DR) so that the latter is held between the cover cap (KP) and the base plate (GP), the stop (AG) for the ends of the leaf spring being formed on the spacer ring.

8. Sensor according to one of the preceding claims, wherein the bonding wires (BW) of the sensor element (SE) are laterally curved outward.

9. Sensor according to one of the preceding claims, wherein the sleeve (HS) is formed from metal,
wherein the base plate (GP), carriage (SC), cover cap (KP) and optionally spacer ring (DR) are formed as an injection-moulded part from a filled or unfilled plastic.

## Revendications

1. Capteur de mesure d'un paramètre en un point de mesure d'une surface (OF) par contact direct, ledit capteur comportant
- un élément de capteur (SE) disposé de manière mobile dans le capteur (SR),
- un élément à ressort (FE) qui peut absorber élastiquement une force de pression avec laquelle l'élément de capteur est pressé contre le point de mesure,
- un coulisseau (SC) sur lequel sont fixés l'élément de capteur (SE) et l'élément à ressort (FE),
- une plaque de base (GP),
- un capot de recouvrement (KP) posé sur la plaque de base,
- la plaque de base et le capot de recouvrement formant un boîtier qui reçoit et enferme le coulisseau pourvu de l'élément à ressort,
capteur dans lequel le coulisseau est fixé au moyen de l'élément à ressort dans le capteur avec une précontrainte de manière à ce que le coulisseau, et donc l'élément de capteur, puisse être déplacé en direction de la plaque de base en s'opposant à la précontrainte, **caractérisé en ce que** l'élément à ressort (FE) est conçu sous la forme d'un ressort à lame pourvu de deux extrémités qui dépassent toutes deux latéralement du coulisseau (SC),
les deux extrémités du ressort à lame sont en appui sur une butée (AG) dans le boîtier et
le coulisseau (SC) et l'élément de capteur (SE) fixé à celui-ci sont pressés en direction de la plaque de base (GP) contre la butée (AG),
la plaque de base (GP) comporte des broches de connexion (AS) et le capteur comporte des fils de connexion (BW) qui relient électriquement l'élément de capteur aux broches de connexion.

2. Capteur selon l'une des revendications précédentes, dans lequel le capot de recouvrement (KP) comporte un guide (FG) dans lequel le coulisseau (SC) est guidé de manière à être mobile en direction de la plaque de base (GP) et inversement.

3. Capteur selon l'une des revendications précédentes, dans lequel le coulisseau (SC) comporte un manchon (HS) pourvu d'une extrémité fermée dans lequel l'élément de capteur (SE) est disposé et fixé,
dans lequel le capot de recouvrement (KP) comporte une ouverture à travers laquelle est guidée l'extrémité fermée du manchon (HS) qui est dirigée à l'opposé de la plaque de base.

4. Capteur selon l'une des revendications précédentes, dans lequel le capot de recouvrement (KP) comporte des éléments d'encliquetage (RE) avec lesquels il est encliqueté dans des logements correspondants (RA) de la plaque de base (GP).

5. Capteur selon l'une des revendications précédentes, dans lequel les broches de connexion (AS) sont enfoncées dans la plaque de base (GP) et traversent celle-ci de manière à comporter une portion tournée vers l'intérieur et une portion tournée vers l'extérieur (AG_{I}, AG_{A}), cette dernière étant prévue pour relier le capteur (SR) à un environnement de circuit.

6. Capteur selon l'une des revendications précédentes, dans lequel l'élément de capteur (SE) est un capteur de température de type NTC,
dans lequel l'élément de capteur (SE) est inséré dans le manchon (HS) où il est encapsulé avec un composé d'enrobage.

7. Capteur selon l'une des revendications précédentes, dans lequel la plaque de base (GP) est conçue comme une plaque plate,
dans lequel une bague d'écartement (DR), qui forme un segment du boîtier, est insérée entre le capot de recouvrement (KP) et la plaque de base (GP), les éléments d'encliquetage (RE) s'engageant à travers la bague d'écartement (DR) de manière à ce que celle-ci soit maintenue entre le capot de recouvrement (KP) et la plaque de base (GP), la butée (AG) destinée aux extrémités du ressort à lame étant formée sur la bague d'écartement.

8. Capteur selon l'une des revendications précédentes, dans lequel les fils de connexion (BW) de l'élément de capteur (SE) sont pliés latéralement vers l'extérieur.

9. Capteur selon l'une des revendications précédentes, dans lequel le manchon (HS) est en métal,
dans lequel la plaque de base (GP), le coulisseau (SC), le capot de recouvrement (KP) et éventuellement la bague d'écartement (DR) sont conçus comme une pièce moulée par injection en matière synthétique pourvue ou non d'une charge.
